# EUROPEAN PATENT APPLICATION

(11) **EP 4 730 634 A1**
(43) Date of publication of application: **22.04.2026**
(21) Application number: 24206650.4
(22) Date of filing: 15.10.2024
(51) Int. Cl.: H02M 5/458, H02J 3/32, H02J 1/14, H02J 3/36, H02J 7/00, H02J 15/00, H02J 7/34

(54) **POWER SYSTEMS**

(71) Applicant: GE Energy Power Conversion Technology Limited, Rugby, Warwickshire CV21 1BD (GB)
(72) Inventor: Geske, Martin, 12277 Berlin (DE); Jalili, Kamran, 12277 Berlin (DE)
(74) Representative: Serjeants LLP

(57) **Abstract**

A power system (1) is described. The power system (1) includes an AC/DC power converter (6) electrically connectable to an AC power network (2) and a DC link (8). An electrical load (10) is electrically connected to the DC link (8). A DC/DC power converter (14) is electrically connected to the DC link (8) and an energy storage device (12). A first converter controller (16) is adapted to control the DC/DC power converter (14) to regulate the DC link voltage, and the flow of power between the energy storage device (12) and the DC link (8). The second converter controller (18) is adapted to control the AC/DC power converter (6) and to regulate or control at least one of the voltage at the AC terminals of the AC/DC power converter (6), inertial AC power, and synchronisation with the AC power network (2).

## Description

### Technical Field

The present invention relates to a power system comprising an electrical load. The electrical load may be one or more electrolysers of an electrolyser plant that may be used to generate hydrogen and oxygen, for example. The electrical load may alternatively be any suitable industrial system or load.

### Background Art

It is known to use an electrolyser plant to generate hydrogen and oxygen. An electrolyser plant may have one or more electrolysers. Each electrolyser typically has one or more stacks, where each stack has one or more electrolyser cells that generate hydrogen and oxygen when a direct current (DC) voltage is applied across the stack. Some electrolysers will include a plurality of stacks. A known type of electrolyser cell uses proton exchange membrane or polymer electrolyte membrane (PEM) technology, alkaline water (ALK) technology, or solid oxide electrolysis (SOES) technology, for example.

The electrolyser plant may be connected to an alternating current (AC) power network such as a supply grid. Alternatively, the AC power network may be a microgrid powered by one or more renewable energy sources such as wind turbines, for example, for the generation of so-called "green" hydrogen.

### Summary of the Invention

The present invention provides a power system comprising:
an AC/DC power converter comprising:
   at least one AC terminal electrically connectable to an AC power network,
   at least two DC terminals electrically connected to a DC link of the power system, and
   a plurality of semiconductor switching devices;
an electrical load electrically connected to the DC link;
a DC/DC power converter comprising:
   at least two first DC terminals electrically connected to the DC link,
   at least two second DC terminals, and
   a plurality of semiconductor switching devices;
an energy storage device electrically connected to the second DC terminals of the DC/DC power converter;
a first converter controller adapted to control the switching of the plurality of semiconductor switching devices of the DC/DC power converter; and
a second converter controller adapted to control the switching of the plurality of semiconductor switching devices of the AC/DC power converter;
wherein the first converter controller is adapted to regulate:
   (i) the DC link voltage, and
   (ii) the flow of power between the energy storage device and the DC link; and
wherein the second converter controller is adapted to regulate or control at least one of:
   (i) the voltage at the AC terminals of the AC power network,
   (ii) inertial AC power, and
   (iii) synchronisation with the AC power network.

The AC/DC power converter may have any suitable topology utilising any suitable semiconductor switching devices. The semiconductor switching devices of the AC/DC power converter are turned on and off by gate drive commands generated by the second converter controller to control the flow of power between the AC power network and the DC link. If the AC power network is a three-phase power network (e.g., a supply grid or microgrid), the AC/DC power converter may have three AC terminals, each AC terminal being electrically connected to a respective phase of the AC power network optionally by means of a transformer. The AC/DC power converter may have three converter legs electrically connected between the DC terminals, each converter leg defining an AC terminal of the AC/DC power converter. The AC/DC power converter may be capable of bidirectional power flow so that it may be operated as an active rectifier to supply power from the AC power network to the DC link, and as an inverter to supply power from the DC link to the AC power network. In another arrangement, the AC/DC power converter may only be operated as an active rectifier to supply power from the AC power network to the DC link.

The DC link may comprise one or more DC link capacitors.

The DC/DC power converter may have any suitable topology utilising any suitable semiconductor switching devices. The semiconductor switching devices of the DC/DC power converter are turned on and off by gate drive commands generated by the first converter controller to control the flow of power between the energy storage device and the DC link.

The energy storage device may have any suitable construction, e.g., a battery, supercapacitor, flywheel storage etc. and may supply power to the DC link through the DC/DC power converter. The energy storage device may also be charged from the DC link through the DC/DC power converter. The DC/DC power converter is therefore capable of bidirectional power flow.

The electrical load may be one or more electrolysers and the power system may be an electrolyser plant, for example. Each electrolyser may be electrically connected to the DC link by a second DC/DC power converter. Two or more electrolysers may be electrically connected to the DC link in parallel, optionally by a respective second DC/DC power converter. The electrical load may alternatively be an industrial system or load such as a heating or melting system, a chlorine or aluminium electrolysis system, a back-up power system, or a system for lighting, ventilation or air-conditioning, for example. Other examples of electrical load include typical loads in a DC minigrid such as DC/DC or DC/AC converters used in industrial test benches.

The DC/DC power converter may be controlled by the first converter controller to compensate for changes in the frequency or voltage phase angle of the AC power network (or "network frequency" or "network voltage phase angle"), or in response to a fault in the AC power network such as a low voltage event where the network voltage suddenly drops because of an unexpected fault or network failure, for example. If the electrical load is one or more electrolysers, for example, such low voltage events may interrupt the production of hydrogen if the electrolyser plant needs to stop operation. It will be understood that the sudden shut down of a large electrolyser plant with a significant electrical load should be avoided whenever possible because this can cause instability in the AC power network. This may also be the case for other electrical loads or industrial systems. The DC/DC power converter may be controlled to regulate the power that is supplied from the energy storage device to the DC link to compensate for any reduction in the amount of power that is received from the AC power network during, for example, a low voltage event, and thereby stabilise the power that is supplied to the electrolyser (or other electrical load) through the DC link. The present invention therefore provides the electrolyser plant with a low voltage ride through (LVRT) capability. Such capability may keep the electrolyser plant (or the power system, more generally) operating normally, or at a reduced capacity, if the AC power network experiences a low voltage event. An electrolyser plant that may continue to operate during a low voltage event, and which does not immediately need to be shut down, will require lower frequency restoration reserves. The DC/DC power converter may also be controlled by the first converter controller to compensate for any changes in the amount of power that is supplied to the DC link through the AC/DC power converter in response to changes in the network frequency. This may ensure that the amount of power supplied to the electrolysers through the DC link remains substantially constant during changes in the network frequency.

The first converter controller may be adapted to control the switching of the semiconductor switching devices of the DC/DC power converter based on:
- a measured DC power of the electrical load,
- a DC power reference of the electrical load,
- a change in the DC power reference of the electrical load based on the state of charge (or SoC) of the energy storage device, where the term "SoC" describes the difference between a fully charged energy storage device and the same energy storage device in use, and may be defined as the ratio of the remaining charge in the energy storage device divided by the maximum charge that may be provided by the energy storage device, and where the change in the DC power reference based on the SoC may be provided, for example, by a separate regulator of the energy storage device,

- a measured DC link voltage,
- a measured DC voltage of the energy storage device, and
- a measured DC current of the energy storage device.

The first converter controller may comprise a DC power regulator adapted to regulate the power in the DC link. The DC power regulator may comprise a feed-forward channel and a parallel first regulator controller (e.g., a proportional-integral (PI) controller) and may be adapted to determine a DC voltage reference of the electrical load. The difference between the DC power reference of the electrical load and the change in the DC power reference of the electrical load based on the SoC of the energy storage device may be determined (e.g., using a first summing node) and may be provided to the feed-forward channel with electrical load characteristics. The difference between: (a) the previously-determined difference between the DC power reference of the electrical load and the change in the DC power reference of the electrical load based on the SoC of the energy storage device (i.e., the output of the first summing node), and (b) the measured DC power of the electrical load may be determined (e.g., using a second summing node) and may be provided to the first regulator controller. The output of the feed-forward channel may be added to the output of the first regulator controller (e.g., using a third summing node) to determine the DC voltage reference of the electrical load.

The first converter controller may further comprise a fast-acting DC voltage regulator adapted to regulate and stabilise the DC link voltage, particularly during transient events affecting the AC power network such as unexpected and sudden changes in the network frequency and low voltage events, for example. The fast-acting DC voltage regulator may comprise a second regulator controller, e.g., a PI controller. The difference between the DC voltage reference of the electrical load - as determined by the DC power regulator - and the measured DC link voltage may be determined (e.g., using a summing node) and provided to the second regulator controller. The output of the second regulator controller may define a DC current reference.

The first converter controller may further comprise a DC current regulator. The DC current regulator may use the DC current reference - as determined by the fast-acting DC voltage regulator - and the measured DC voltage and current of the energy storage device to determine a modulation depth signal that may be used to generate the gate drive commands to control the semiconductor switching devices of the DC/DC power converter to turn on and off. The gate drive commands may be generated using any suitable control scheme, e.g., pulse width modulation (PWM). The gate drive commands may be generated by a PWM generator of the first converter controller in a known way.

The second converter controller may be adapted to control the switching of the plurality of semiconductor switching devices of the AC/DC power converter based on:
- a measured AC power network voltage, i.e., the voltage at the AC terminals of the AC/DC power converter,
- an AC power network voltage reference,
- a measured AC power network power,
- an AC power network power reference, and
- an AC power network angular frequency for synchronisation purposes.

The second converter controller may comprise a fast-acting AC voltage regulator. The fast-acting AC voltage regulator may comprise a third regulator controller, e.g., a PI controller. The difference between the AC power network voltage reference and the measured AC power network voltage may be determined (e.g., using a summing node) and provided to the third regulator controller. The output of the third regulator controller may define a voltage command signal to control the AC/DC power converter.

The second converter controller may also comprise an inertial AC power regulator, which may emulate the dynamic behaviour of a rotating synchronous generator. The inertial AC power regulator may comprise a fourth regulator controller, e.g., a PI controller. The difference between the AC power network power reference and the measured AC power network power may be determined (e.g., using a summing node) and provided to the fourth regulator controller. A phase locked loop (PLL) circuit may provide the AC power network phase angle ("network voltage phase angle") and the angular frequency. The difference between the output of the fourth regulator controller and the AC power network angular frequency may be determined (e.g., using a second summing node) and used to determine a voltage angle command signal to control the AC/DC power converter. The voltage and voltage angle command signals may be used to generate the gate drive commands to control the semiconductor switching devices of the AC/DC power converter to turn on and off. The gate drive commands may be generated using any suitable control scheme, e.g., pulse width modulation (PWM). The gate drive commands may be generated by a PWM generator of the second converter controller in a known way.

The present invention further provides a method of controlling a power system comprising:
an AC/DC power converter comprising:
   at least one AC terminal electrically connectable to an AC power network,
   at least two DC terminals electrically connected to a DC link of the power system, and
   a plurality of semiconductor switching devices;
an electrical load electrically connected to the DC link;
a DC/DC power converter comprising:
   at least two first DC terminals electrically connected to the DC link,
   at least two second DC terminals, and
   a plurality of semiconductor switching devices; and
an energy storage device electrically connected to the second DC terminals of the DC/DC power converter;
the method comprising:
   controlling the switching of the plurality of semiconductor switching devices of the DC/DC power converter to regulate:
      (i) the DC link voltage, and
      (ii) the flow of power between the energy storage device and the DC link; and
   controlling the switching of the plurality of semiconductor switching devices of the AC/DC power converter to regulate or control at least one of:
      (i) the voltage at the AC terminals of the AC power network,
      (ii) inertial AC power, and
      (iii) synchronisation with the AC power network.

The power system and its individual components (e.g., the DC/DC power converter, electrical load, AC/DC power converter, energy storage device etc.) may be as described above.

The method may further comprise controlling the switching of the semiconductor switching devices of the DC/DC power converter based on:
- a measured DC power of the electrical load,
- a DC power reference of the electrical load,
- a change in the DC power reference of the electrical load based on the SoC of the energy storage device,
- a measured DC link voltage,
- a measured DC voltage of the energy storage device, and
- a measured DC current of the energy storage device.

The first converter controller may comprise a DC power regulator adapted to regulate the power in the DC link. The DC power regulator may include a feed-forward channel with electrical load characteristics and a parallel first regulator controller, e.g., a PI controller. The method may comprise regulating the power in the DC link by determining a DC voltage reference of the electrical load. The difference between the DC power reference of the electrical load and the change in the DC power reference of the electrical load based on the SoC of the energy storage device may be determined (e.g., using a first summing node) and may be provided to the feed-forward channel of the DC power regulator. The difference between: (a) the previously-determined difference between the DC power reference of the electrical load and the change in the DC power reference of the electrical load based on the SoC of the energy storage device (i.e., the output of the first summing node), and (b) the measured DC power of the electrical load may be determined (e.g., using a second summing node) and may be provided to the first regulator controller of the DC power regulator. The output of the feed-forward channel may be added to the output of the first regulator controller (e.g., using a third summing node) to determine the DC voltage reference of the electrical load.

The first converter controller may further comprise a fast-acting DC voltage regulator adapted to regulate and stabilise the DC link voltage, particularly during transient events affecting the AC power network such as unexpected and sudden changes in the network frequency and low voltage events, for example. The fast-acting DC voltage regulator may comprise a second regulator controller, e.g., a PI controller. The method may comprise determining the difference between the DC voltage reference of the electrical load and the measured DC link voltage (e.g., using a summing node) and providing the difference to the second regulator controller. The output of the second regulator controller may define a DC current reference.

The first converter controller may further comprise a DC current regulator. The DC current regulator may use the DC current reference and the measured DC voltage and current of the energy storage device to determine a modulation depth signal that may be used to generate the gate drive commands to control the semiconductor switching devices of the DC/DC power converter to turn on and off. The gate drive commands may be generated using any suitable control scheme, e.g., pulse width modulation (PWM). The gate drive commands may be generated by a PWM generator of the first converter controller in a known way.

The method may further comprise controlling the switching of the plurality of semiconductor switching devices of the AC/DC power converter based on:
- a measured AC power network voltage, i.e., the voltage at the AC terminals of the AC/DC power converter,
- an AC power network voltage reference,
- a measured AC power network power,
- an AC power network power reference, and
- an AC power network angular frequency for synchronisation purposes.

The second converter controller may comprise a fast-acting AC voltage regulator. The fast-acting AC voltage regulator may comprise a third regulator controller, e.g., a PI controller. The method may comprise determining the difference between the AC power network voltage reference and the measured AC power network voltage (e.g., using a summing node) and providing the difference to the third regulator controller. The output of the third regulator controller may define a voltage command signal to control the AC/DC power converter.

The second converter controller may also comprise an inertial AC power regulator, which may emulate the dynamic behaviour of a rotating synchronous generator. The inertial AC power regulator may comprise a fourth regulator controller, e.g., a PI controller. The method may comprise determining the difference between the AC power network power reference and the measured AC power network power (e.g., using a summing node) and providing the difference to the fourth regulator controller. A phase locked loop (PLL) circuit may provide the AC power network phase angle ("network voltage phase angle") and the angular frequency. The difference between the output of the fourth regulator controller and the AC power network angular frequency may be determined (e.g., using a second summing node) and used to determine a voltage angle command signal to control the AC/DC power converter. The voltage and voltage angle command signals may be used to generate the gate drive commands to control the semiconductor switching devices of the AC/DC power converter to turn on and off. The gate drive commands may be generated using any suitable control scheme, e.g., pulse width modulation (PWM). The gate drive commands may be generated by a PWM generator of the second converter controller in a known way.

### Drawings

Figure 1 is a schematic diagram of a power system according to the present invention implemented as an electrolyser plant;
Figure 2 is a schematic diagram of a first converter controller of the power system;
Figure 3 is a schematic diagram of a DC power regulator of the first converter controller;
Figure 4 is a schematic diagram of a fast-acting DC voltage regulator of the first converter controller;
Figure 5 is a schematic diagram of a fast-acting AC voltage regulator of the second converter controller;
Figure 6 is a schematic diagram of an inertial AC power regulator of the second converter controller;
Figures 7 and 8 are waveform diagrams showing responses during transient events of the power system.

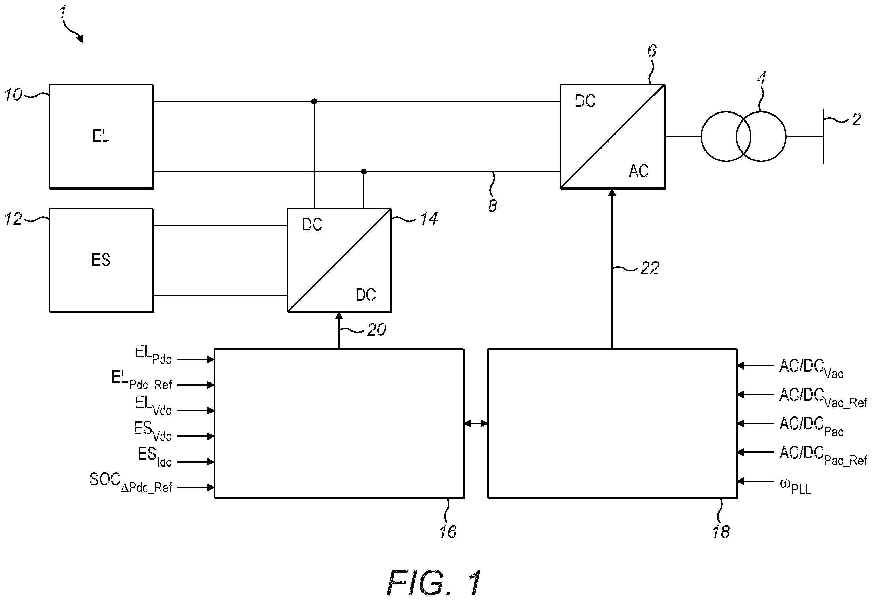

Referring to Figure 1, an electrolyser plant 1 is electrically connected to an AC power network 2 by a transformer 4. The AC power network 2 may be a three-phase supply grid or microgrid, for example.

The electrolyser plant 1 includes an AC/DC power converter 6. The AC/DC power converter 6 includes AC terminals that are electrically connected to the transformer 4, and DC terminals.

The electrolyser plant 1 includes a DC link 8 that is electrically connected to the DC terminals of the AC/DC power converter 6. Although not shown, the DC link 8 will normally include at least one DC link capacitor.

The electrolyser plant 1 includes an electrolyser 10 (also labelled "EL"). It should be understood that any measured values or references shown in Figures 1 to 8 and described below that include "EL" relate to the electrolyser 10. As described above, the electrolyser 10 can include one or more stacks, where each stack includes one or more electrolyser cells using any suitable electrolyser technology, e.g., proton exchange membrane or polymer electrolyte membrane (PEM) technology where each electrolyser cell includes a polymer membrane. A DC voltage may be applied to each electrolyser. Water reacts at the anode of each electrolyser cell to create oxygen and positively charged hydrogen ions (protons) that selectively move across the polymer membrane to the cathode. At the cathode of each electrolyser cell, the hydrogen ions combine with electrons flowing through an external circuit to form hydrogen. The electrolyser 10 has DC terminals that are electrically connected to the DC link 8. It will also be readily understood that the specific description is applicable to a generic power system with one or more electrical loads that are electrically connected to the DC link 8, and not just to an electrolyser plant.

An energy storage device 12 (also labelled "ES") is electrically connected to the DC link 8 by a DC/DC power converter 14. It should be understood that any measured values or references shown in Figures 1 to 8 and described below that include "ES" relate to the energy storage device 12.

The DC/DC power converter 14 is controlled by a first converter controller 16. In particular, the DC/DC power converter 14 has a plurality of semiconductor switching devices arranged in a suitable topology and the first converter controller 16 is adapted to control their switching, in other words to turn them on and off as required, in order to regulate: (i) the DC link voltage, i.e., voltage in the DC link 8, and (ii) the flow of power between the energy storage device 12 and the DC link 8. A typical electrolyser may operate with a nominal DC link voltage in a range from about 800 Vdc up to 1500 Vdc depending on the load and the electrolyser type and design. The semiconductor switching devices of the DC/DC power converter 14 are turned on and off by gate drive commands 20 generated by the first converter controller 16 to control the flow of power between the energy storage device 12 and the DC link 8.

The AC/DC power converter 6 is controlled by a second converter controller 18. In particular, the AC/DC power converter 6 has a plurality of semiconductor switching devices arranged in a suitable topology (e.g., in three converter legs, each converter leg defining one of the AC terminals) and the second converter controller 18 is adapted to control their switching, in other words to turn them on and off as required, in order to regulate or control at least one of: (i) the voltage at the AC terminals of the AC/DC power converter 6, (ii) inertial AC power, and (iii) synchronisation with the AC power network 2. The semiconductor switching devices of the AC/DC power converter 6 are turned on and off by gate drive commands 22 generated by the second converter controller 18 to control the flow of power between the AC power network 2 and the DC link 8.

The AC/DC power converter 6 is capable of bidirectional power flow so that it may be operated as an active rectifier to supply power from the AC power network 2 to the DC link 8, and as an inverter to supply power from the DC link 8 to the AC power network 2.

The energy storage device 12 may have any suitable construction, e.g., a battery, supercapacitor, flywheel storage etc. and may supply power to the DC link 8 through the DC/DC power converter 14. The energy storage device 12 may also be charged from the DC link 8 through the DC/DC power converter 14. The DC/DC power converter 14 is therefore also capable of bidirectional power flow.

The first converter controller 16 is adapted to control the switching of the semiconductor switching devices of the DC/DC power converter 14 based on:
- a measured DC power of the electrolyser 10 (labelled EL_{Pdc}),
- a DC power reference of the electrolyser 10 (labelled EL_{Pdc_Ref}),
- a change in the DC power reference of the electrolyser 10 based on the state of charge (or SoC) of the energy storage device 12 (labelled SoC_{ΔPdc_Ref}),
- a measured DC link voltage that is supplied to the electrolyser 10 (labelled EL_{Vdc}),
- a measured DC voltage of the energy storage device 12 (labelled ES_{Vdc}), and
- a measured DC current of the energy storage device 12 (labelled ES_{Idc}).

The second converter controller 18 is adapted to control the switching of the plurality of semiconductor switching devices of the AC/DC power converter based on:
- a measured AC power network voltage (labelled AC/DC_{Vac}), i.e., the voltage at the AC terminals of the AC/DC power converter 6,
- an AC power network voltage reference (labelled AC/DC_{Vac_Ref}),
- a measured AC power network power (labelled AC/DC_{Pac}),
- an AC power network power reference (labelled AC/DC_{Pac_Ref}), and
- an AC power network angular frequency (labelled ω_{PLL}).

The various measured values may be provided to the first and second converter controllers 16, 18 from one or more sensors (not shown) that may directly measure electrical parameters such as voltage and current, or they may be determined indirectly, e.g., using the measured values of electrical parameters such as voltage and current provided by the one or more sensors, for example.

The various references may be set for the particular electrolyser plant 1, e.g., by a plant controller (not shown).

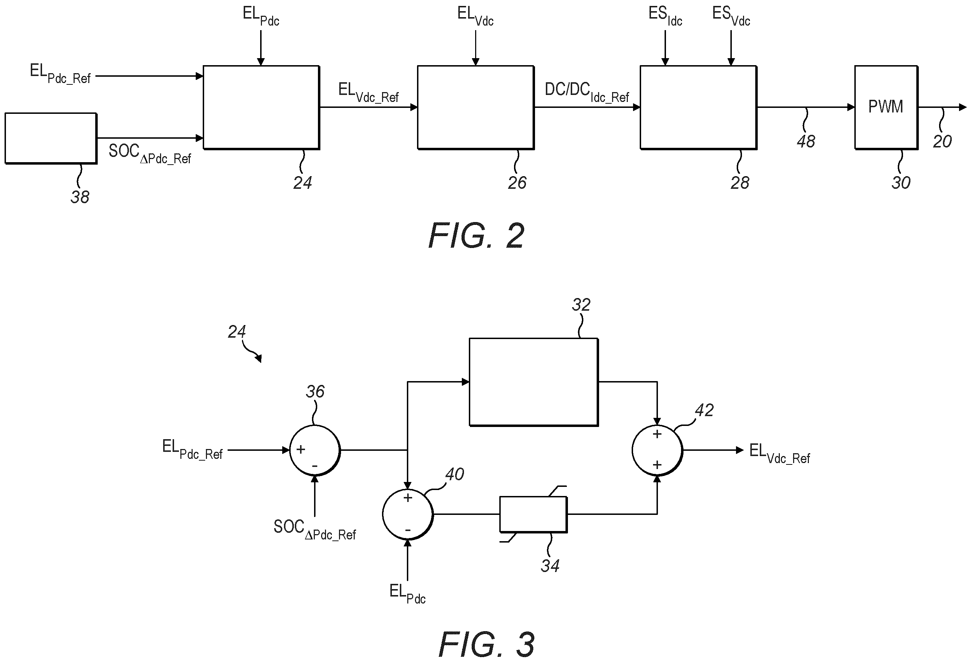

Referring to Figure 2, the first converter controller 16 includes:
- a DC power regulator 24,
- a fast-acting DC voltage regulator 26,
- a DC current regulator 28, and
- a pulse width modulation (PWM) generator 30 that generates the gate drive commands 20.

The DC power regulator 24 is adapted to regulate the power in the DC link 8. As shown in Figure 3, the DC power regulator 24 includes a feed-forward channel 32 and a parallel PI controller 34. The difference between the DC power reference of the electrolyser 10 (i.e., EL_{Pdc_Ref}) and the change in the DC power reference based on the SoC (SoC_{ΔPdc}__{Ref}) is determined using a first summing node 36 and is provided to the feed-forward channel 32 with electrolyser characteristics. The feed-forward channel 32 includes the power voltage characteristics of the electrolyser 10 and estimates the desired DC voltage of the electrolyser based on the DC power reference of the electrolyser (EL_{Pdc_Ref}). The change in the DC power reference of the electrolyser 10 based on the SoC of the energy storage device 12 (SoC_{ΔPdc_Ref}) is provided by a separate regulator 38 (Figure 2) of the energy storage device 12, for example. The difference between the output of the first summing node 36 and the measured DC power of the electrolyser 10 (i.e., EL_{Pdc}) is determined using a second summing node 40 and is provided to the PI controller 34. The output of the feed-forward channel 32 is added to the output of the PI controller 34 using a third summing node 42 to determine a DC voltage reference (labelled EL_{Vdc_Ref}) of the electrolyser 10.

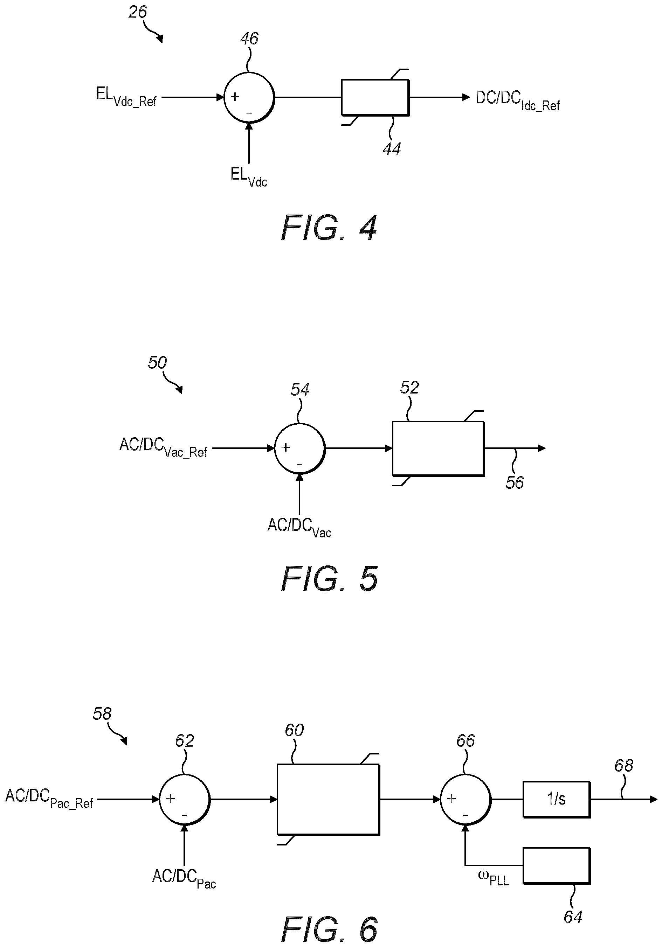

The fast-acting DC voltage regulator 26 is adapted to regulate and stabilise the DC link voltage, particularly during transient events affecting the AC power network 2 such as unexpected and sudden changes in the network frequency and low voltage events. As shown in Figure 4, the fast-acting DC voltage regulator 26 includes a PI controller 44. The difference between the DC voltage reference (i.e., EL_{Vdc_Ref}) of the electrolyser 10, as determined by the DC power regulator 24, and the measured DC link voltage (i.e., EL_{Vdc}) is determined using a summing node 46 and provided to the PI controller 44. The output of the PI controller is a DC current reference (labelled DC/DC_{Idc_Ref}).

The DC current regulator 28 uses the DC current reference (i.e., DC/DC_{Idc_Ref}) as determined by the fast-acting DC voltage regulator 26, and the measured DC voltage and current of the energy storage device 12 (i.e., ES_{Vdc} and ES_{Idc}), to determine a modulation depth signal 48 (see Figure 2) that is used by the PWM generator 30 to generate the gate drive commands 20 to control the semiconductor switching devices of the DC/DC power converter 14 to turn on and off.

The second converter controller 18 includes a fast-acting AC voltage regulator 50 shown in Figure 5. The fast-acting AC voltage regulator 50 includes a PI controller 52. The difference between the AC power network voltage reference (i.., AC/DC_{Vac_Ref}) and the measured AC power network voltage (i.e., AC/DC_{Vac}) is determined using a summing node 54 and provided to the PI controller 52. The output of the PI controller 52 defines a voltage command signal 56 to control the AC/DC power converter 6.

The second converter controller 18 also includes an inertial AC power regulator 58, which may emulate the dynamic behaviour of a rotating synchronous generator. As shown in Figure 6, the inertial AC power regulator 58 includes a PI controller 60. The difference between the AC power network power reference (i.e., AC/DC_{Pac_Ref}) and the measured AC power network power (i.e., AC/DC_{Pac}) is determined using a summing node 62 and provided to the PI controller 60. A phase locked loop (PLL) circuit 64 provides the angular frequency (ω_{PLL}). The difference between the output of the PI controller 60 and the angular frequency (ω_{PLL}) is determined using a second summing node 66 and used to determine a voltage angle command signal 68 to control the AC/DC power converter 6. The voltage and voltage angle command signals 56, 68 are used to generate the gate drive commands 22 to control the semiconductor switching devices of the AC/DC power converter 6 to turn on and off. The gate drive commands 22 may be generated by a PWM generator (not shown), for example.

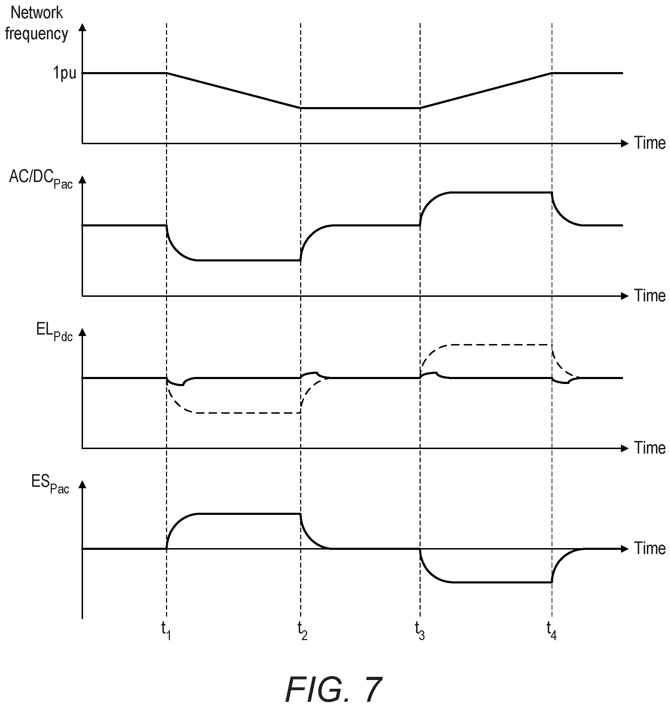

Figure 7 shows a transient event where the frequency of the AC power network 2 (or "network frequency") initially decreases between times t₁ and t₂ with a negative rate of change of frequency (RoCoF) and then subsequently increases back to the nominal value with a positive RoCoF between time t₃ and t₄. The inertial AC power regulator 58 might respond to those changes in network frequency by changing the power supplied through the AC/DC power converter 6 proportionally to the RoCoF of the network frequency. To keep the amount of power that is supplied to the electrolyser 10 substantially constant, the first converter controller 16 may control the DC/DC power converter 14 so that power is supplied from the energy storage device 12 to the DC link 8 (i.e., the energy storage device is discharged) and then supplied from the DC link 8 to the energy storage device 12 (i.e., the energy storage device is charged). In Figure 7 the dashed line indicates the amount of power that would be supplied to the electrolyser 10 without compensation.

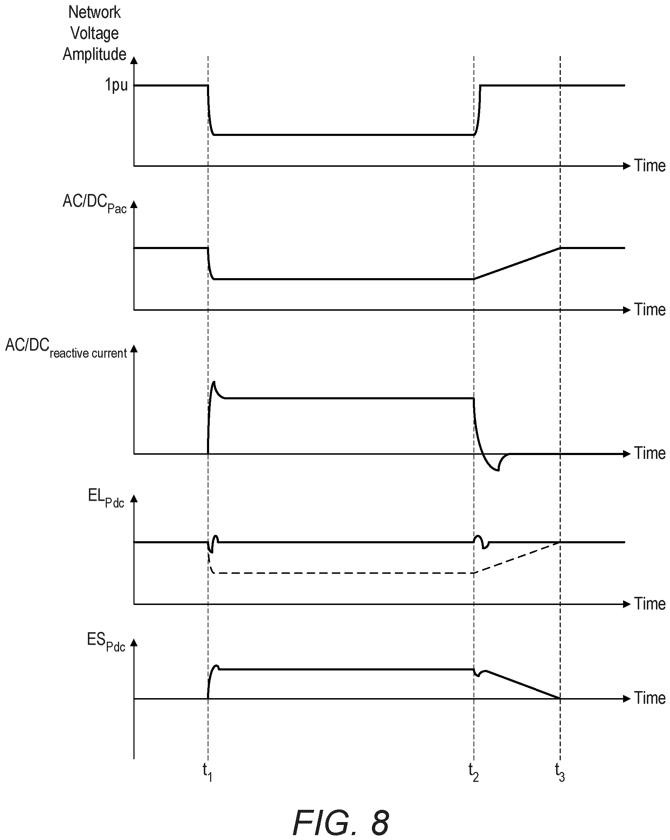

Figure 8 shows a low voltage event where the network voltage amplitude suddenly drops at time t₁ and then subsequently recovers at time t₂. A low voltage event typically results in a sudden drop in the active power supplied to the AC terminals of the AC/DC power converter 6 from the AC power network 2 and there will often be an over-excitation of reactive current at the AC/DC power converter 6 as shown. After the network voltage recovers, the AC/DC power converter 6 ramps up the active power to the pre-fault value in a predefined time, e.g., 500 ms, between times t₂ and t₃. The first converter controller 16 may control the DC/DC power converter 14 during the grid fault and the ramp-up time after the recovery so that power is supplied from the energy storage device 12 to the DC link 8 (i.e., the energy storage device is discharged) to compensate for the drop in active power and to stabilise the power supplied to the electrolyser 10. In Figure 8 the dashed line indicates the amount of power that would be supplied to the electrolyser 10 without compensation.

## Claims

1. A power system (1) comprising:
an AC/DC power converter (6) comprising:
at least one AC terminal electrically connectable to an AC power network (2),
at least two DC terminals electrically connected to a DC link (8) of the power system (1), and
a plurality of semiconductor switching devices;
an electrical load (10) electrically connected to the DC link (8);
a DC/DC power converter (14) comprising:
at least two first DC terminals electrically connected to the DC link (8),
at least two second DC terminals, and
a plurality of semiconductor switching devices;
an energy storage device (12) electrically connected to the second DC terminals of the DC/DC power converter (14);
a first converter controller (16) adapted to control the switching of the plurality of semiconductor switching devices of the DC/DC power converter (14); and
a second converter controller (18) adapted to control the switching of the plurality of semiconductor switching devices of the AC/DC power converter (6);
wherein the first converter controller (16) is adapted to regulate:
(i) the DC link voltage, and
(ii) the flow of power between the energy storage device (12) and the DC link (8); and
wherein the second converter controller (18) is adapted to regulate or control at least one of:
(i) the voltage at the AC terminals of the AC/DC power converter (6),
(ii) inertial AC power, and
(iii) synchronisation with the AC power network (2).

2. A power system (1) according to claim 1, wherein the first converter controller (16) is adapted to control the switching of the semiconductor switching devices of the DC/DC power converter (14) based on:
a measured DC power of the electrical load (EL_{Pdc}),
a DC power reference of the electrical load (EL_{Pdc_Ref}),
a change in the DC power reference of the electrical load based on the state of charge of the energy storage device (SoC_{ΔPdf_Ref}),
a measured DC link voltage of the electrical load (EL_{Vdc}),
a measured DC voltage of the energy storage device (ES_{Vdc}), and
a measured DC current of the energy storage device (ES_{Idc}).

3. A power system (1) according to claim 2, wherein the first converter controller (16) comprises a DC power regulator (24) adapted to regulate the power in the DC link (8).

4. A power system (1) according to claim 3, wherein the DC power regulator (24) comprises a feed-forward channel (32) and a parallel first regulator controller (34), e.g., a proportional-integral PI controller, and wherein the DC power regulator (24) is adapted to determine a DC voltage reference (EL_{Vdc_Ref}) of the electrical load (10) based on:
the DC power reference of the electrical load (EL_{Pdc_Ref}),
the change in the DC power reference based on the state of charge (SoC_{ΔPdf_Ref}),
and
the measured DC power of the electrical load (EL_{Pdc}).

5. A power system (1) according to claim 4, wherein the first converter controller (16) further comprises a fast-acting DC voltage regulator (26) adapted to regulate and stabilise the DC link voltage.

6. A power system (1) according to claim 5, wherein the fast-acting DC voltage regulator (26) comprises a second regulator controller (44), e.g., a PI controller, and wherein the fast-acting DC voltage regulator (26) is adapted to determine a DC current reference (DC/DC_{Idc_Ref}) based on:
the DC voltage reference (EL_{Vdc_Ref}) of the electrical load (10), and
the measured DC link voltage (EL_{Vdc}).

7. A power system (1) according to claim 6, wherein the first converter controller (16) further comprises a DC current regulator (28) adapted to determine a modulation depth signal for controlling the switching of the plurality of semiconductor switching devices of the DC/DC power converter (14) based on:
the DC current reference (DC/DC_{Idc_Ref}), and
the measured DC voltage and current of the energy storage device (ES_{Vdc} and *ES_{Idc}*).

8. A power system (1) according to any preceding claim, wherein the second converter controller (18) is adapted to control the switching of the plurality of semiconductor switching devices of the AC/DC power converter (6) based on:
a measured AC power network voltage (AC/DC_{Vac}),
an AC power network voltage reference (AC/DC_{Vac}),
a measured AC power network power (AC/DC_{Pac}),
an AC power network power reference (AC/DC_{Pac_Ref}), and
an AC power network angular frequency (ω_{PLL}).

9. A power system (1) according to claim 8, wherein the second converter controller (18) comprises a fast-acting AC voltage regulator (50) adapted to determine a voltage command signal (56) for controlling the AC/DC power converter (6) based on:
the AC power network voltage reference (AC/DC_{Vac_Ref}), and
the measured AC power network voltage (AC/DC_{Vac}).

10. A power system (1) according to claim 9, wherein the second converter controller (18) further comprises an inertial AC power regulator (58) adapted to determine a voltage angle command signal (68) for controlling the AC/DC power converter (6) based on:
the AC power network power reference (AC/DC_{Pac_Ref}),
the measured AC power network power (AC/DC_{Pac}), and
the AC power network angular frequency (ω_{PLL}).

11. A power system (1) according to any preceding claim, wherein the at least one AC terminal of the AC/DC power converter (6) is electrically connectable to the AC power network (2) by a transformer (4) of the power system (1).

12. A power system according to any preceding claim, wherein the electrical load is electrically connected to the DC link (8) by a second DC/DC power converter.

13. A power system according to any preceding claim, further comprising two or more electrical loads, wherein each electrical load is electrically connected to the DC link in parallel, optionally by a respective second DC/DC power converter.

14. A power system (1) according to any preceding claim, implemented as an electrolyser plant wherein the electrical load (10) is an electrolyser.

15. A method of controlling a power system (1) comprising:
an AC/DC power converter (6) comprising:
at least one AC terminal electrically connectable to an AC power network (2),
at least two DC terminals electrically connected to a DC link (8) of the power system (1), and
a plurality of semiconductor switching devices;
an electrical load (10) electrically connected to the DC link (8);
a DC/DC power converter (14) comprising:
at least two first DC terminals electrically connected to the DC link (8),
at least two second DC terminals, and
a plurality of semiconductor switching devices; and
an energy storage device (12) electrically connected to the second DC terminals of the DC/DC power converter (14);
the method comprising:
controlling the switching of the plurality of semiconductor switching devices of the DC/DC power converter (14) to regulate:
(i) the DC link voltage, and
(ii) the flow of power between the energy storage device (12) and the DC link (8); and
controlling the switching of the plurality of semiconductor switching devices of the AC/DC power converter (6) to regulate or control at least one of:
(i) the voltage at the AC terminals of the AC/DC power converter (6),
(ii) inertial AC power, and
(iii) synchronisation with the AC power network (2).
